# EUROPÄISCHE PATENTANMELDUNG

(11) **EP 3 531 357 A1**
(43) Veröffentlichungstag der Anmeldung: **28.08.2019**
(21) Anmeldenummer: 19159226.0
(22) Anmeldetag: 25.02.2019
(51) Int. Cl.: G06Q 20/20, G07G 1/00, G07G 1/14, G06Q 20/40

(54) **KASSENSYSTEM, VERFAHREN ZUR AUTHENTIFIZIERUNG AN EINEM KASSENSYSTEM, COMPUTERPROGRAMM SOWIE COMPUTERLESBARES MEDIUM**

(30) Priorität: 26.02.2018 DE 102018104302
(71) Anmelder: Anker Kassensysteme GmbH, 33609 Bielefeld (DE)
(72) Erfinder: VOLKMANN, Reiner, 33609 Bielefeld (DE)
(74) Vertreter: Prinz & Partner mbB

(57) **Zusammenfassung**

Ein Kassensystem hat einen Kassencomputer (12), einen Authentifizierungscomputer (14), eine Geldkassette (16) und eine Kamera (28). Der Kassencomputer (12) weist ein Transaktionsmodul auf, das die Geldkassette (16) steuert, wobei die Kamera (28) dazu eingerichtet ist, wenigstens ein Bild vom Gesicht eines zu erkennenden Benutzers aufzunehmen.

Der Authentifizierungscomputer (14) weist ein Authentifizierungsmodul auf, das dazu eingerichtet ist, das wenigstens eine Bild von der Kamera (28) zu empfangen, das Gesicht des zu erkennenden Benutzers in dem wenigstens einen Bild zu erkennen und das Transaktionsmodul freizugeben, wenn das Gesicht des zu erkennenden Benutzers einem autorisierten Benutzer in einer Datenbank entspricht.

Ferner sind ein Verfahren zur Authentifizierung an einem Kassensystem (10), ein Computerprogramm sowie ein computerlesbares Medium gezeigt.

## Beschreibung

Die Erfindung betrifft ein Kassensystem und ein Verfahren zur Authentifizierung eines zu erkennenden Benutzers an einem Kassensystem. Die Erfindung betrifft ferner ein Computerprogramm sowie ein computerlesbares Medium.

In Handelsunternehmen ist Effizienz ein bedeutendes Kriterium für den Erfolg. Dies schließt auch die effiziente Abwicklung eines Kaufvorgangs ein, wobei insbesondere im Lebensmitteleinzelhandel ein Kaufvorgang rasch abgeschlossen werden soll. Dazu ist eine effiziente und einfache Benutzung von Kassensystemen notwendig.

Gleichzeitig müssen Kassensysteme jedoch Sicherheitsvorkehrungen aufweisen, um Missbrauch durch unbefugte Benutzer zu verhindern.

Hierzu sind Kassensysteme bekannt, bei denen sich ein autorisierter Benutzer über einen Schlüssel oder einen Code am Kassensystem identifizieren muss. Diese Systeme sind jedoch dahingehend ineffizient, dass der Benutzer, bevor er das Kassensystem verwenden kann, bereits Schritte zu seiner Authentifizierung durchzuführen hat.

Es ist daher Aufgabe der Erfindung, ein Kassensystem sowie ein Verfahren zur Authentifizierung eines Benutzers an einem Kassensystem bereitzustellen, das sowohl sicher als auch effizient ist.

Die Aufgabe wird gelöst durch ein Kassensystem mit einem Kassencomputer, einem mit dem Kassencomputer zum Datenaustausch verbundenen Authentifizierungscomputer, einer Geldkassette und einer Kamera. Der Kassencomputer ist mit der Geldkassette zum Datenaustausch verbunden und weist ein Transaktionsmodul auf, das die Geldkassette steuert. Die Kamera ist mit dem Authentifizierungscomputer zum Datenaustausch verbunden und ist dazu eingerichtet, wenigstens ein Bild vom Gesicht eines zu erkennenden Benutzers aufzunehmen. Der Authentifizierungscomputer weist ein Authentifizierungsmodul auf, das dazu eingerichtet ist, das wenigstens eine Bild von der Kamera zu empfangen, das Gesicht des zu erkennenden Benutzers in dem wenigstens einen Bild zu erkennen und das Transaktionsmodul freizugeben, wenn das Gesicht des zu erkennenden Benutzers einem autorisierten Benutzer in einer Datenbank entspricht.

Die Aufgabe wird ferner gelöst durch ein Verfahren zur Authentifizierung eines zu erkennenden Benutzers an einem Kassensystem, insbesondere einem Kassensystem nach einem der vorhergehenden Ansprüche, mit den folgenden Schritten:
a) Aufnehmen wenigstens eines Bildes vom Gesicht des zu erkennenden Benutzers mittels einer Kamera,
b) Erkennen des Gesichtes des zu erkennenden Benutzers in dem wenigstens einen Bild,
c) Vergleichen des Gesichtes des zu erkennenden Benutzers mit in einer Datenbank abgelegten Gesichtern,
d) Freigeben eines Transaktionsmoduls des Kassensystems, wenn das Gesicht des zu erkennenden Benutzers einem autorisierten Benutzer in der Datenbank entspricht.

Es wird also eine Gesichtserkennung des Benutzers durchgeführt, der das Kassensystem verwenden möchte.

Dadurch, dass der Benutzer nun vom Kassensystem selbst anhand seines Gesichts erkannt wird, braucht der Benutzer keine weiteren Schritte zu unternehmen, um sich am Kassensystem zu authentifizieren.

Auf diese Weise können unter anderem Situationen, die zu Zeitverlusten führen, wie ein vergessener Schlüssel oder ein vergessener Zugangscode, effektiv verhindert werden. Zugleich ist jedoch sichergestellt, dass nur autorisierte Benutzer das Kassensystem verwenden können.

In der Datenbank können Gesichter nur von autorisierten Benutzern hinterlegt und/oder Gesichter von autorisierten Benutzern als "autorisiert" gekennzeichnet sein, um kenntlich zu machen, ob ein Benutzer autorisiert ist oder nicht. Alternativ oder zusätzlich können in der Datenbank Gesichter hinterlegt sein, die jeweils einem Benutzer zugeordnet sind, wobei in der Datenbank oder einer weiteren Datenbank hinterlegt ist, ob der jeweilige Benutzer autorisiert ist oder nicht.

Falls das Gesicht des zu erkennenden Benutzers keinem autorisierten Benutzer entspricht und/oder nicht in der Datenbank enthalten ist, wird das Transaktionsmodul nicht durch das Authentifizierungsmodul freigegeben.

Der Datenaustausch kann kabelgebunden oder kabellos, zum Beispiel per Bluetooth oder WLAN, erfolgen.

Das Transaktionsmodul ist zum Beispiel dazu eingerichtet, das Kassensystem zur Durchführung von Kassiervorgängen zu steuern.

Beispielsweise ist der Authentifizierungscomputer als ein vom Kassencomputer separater Computer, zusammen mit dem Kassencomputer als ein Computer oder als Teil eines Servers ausgebildet. Auf diese Weise kann gewährleistet werden, dass dem Authentifizierungscomputer genügend Ressourcen zur Durchführung der Gesichtserkennung zur Verfügung stehen.

Dabei kann der Server über ein lokales Netzwerk oder das Internet mit dem Kassencomputer und der Kamera verbunden sein. Denkbar ist auch, dass der Authentifizierungscomputer und die Kamera als eine Baugruppe ausgeführt sind.

Vorzugsweise ist die Datenbank in einem Speicher des Authentifizierungscomputers hinterlegt und/oder auf einem vom Authentifizierungscomputer über ein Netzwerk, insbesondere das Internet, erreichbaren Server hinterlegt, sodass der Authentifizierungscomputer stets Zugriff auf die Datenbank hat.

Um die Gesichtserkennung besonders präzise durchzuführen, kann das Authentifizierungsmodul ein künstliches neuronales Netzwerk, insbesondere ein Convolutional Neural Network, aufweisen.

In einer Ausgestaltung der Erfindung weist das Kassensystem wenigstens ein Eingabemittel, insbesondere einen Barcodescanner, und/oder wenigstens ein Ausgabemittel, insbesondere eine optische Anzeige, auf. Dadurch lässt sich das Kassensystem einfach bedienen.

Das Eingabemittel kann eine Tastatur und/oder eine Waage sein. Das Ausgabemittel kann ein Bildschirm sein. Denkbar ist auch, dass ein berührungsempfindlicher Bildschirm als eines der Eingabemittel und eines der Ausgabemittel vorgesehen ist.

In einer Ausführungsform der Erfindung weist die Geldkassette eine Kennung auf, die die Geldkassette einem Benutzer zuordnet, wobei das Kassensystem ein Lesegerät zum Einlesen der Kennung aufweist. Dadurch kann der Zugriff auf die Geldkassette durch Unbefugte vom Kassensystem unterbunden werden.

Das Lesegerät ist zum Beispiel mit dem Authentifizierungscomputer zum Datenaustausch verbunden.

In einer Ausgestaltung der Erfindung weist das Kassensystem einen Ständer auf, an dem die Kamera befestigt ist. Dadurch ist eine platzsparende Integration der Kamera in das Kassensystem möglich.

Insbesondere kann der Ständer einen zentralen Pfosten haben, auf dem die Kamera befestigt ist. Zum Beispiel sind am Ständer auch Ausgabemittel und/oder Eingabemittel befestigt.

Um benutzerspezifische Einstellungen am Transaktionsmodul und/oder eine Dokumentation der Benutzer, die das Transaktionsmodul verwendet haben, zu ermöglichen, können Informationen über den zu erkennenden Benutzer und/oder den erkannten autorisierten Benutzer an das Transaktionsmodul übermittelt werden. Dies kann zum Beispiel durch das Authentifizierungsmodul geschehen.

In einer weiteren Ausführungsform der Erfindung weist das Kassensystem eine Geldkassette mit einer Kennung, die einem bestimmten Benutzer zugeordnet ist, und ein Lesegerät zum Einlesen der Kennung auf, wobei das Verfahren auch die folgenden Schritte umfasst:
a) Einlesen der Kennung, und
b) Überprüfen, ob die Kennung dem zu erkennenden Benutzer zugeordnet ist.

Auf diese Weise ist eine Zugriffskontrolle auch für die Geldkassette über das Kassensystem möglich.

Um unbefugten Zugriff auf die Geldkassette zu unterbinden, wird das Freigeben des Transaktionsmoduls verhindert, wenn die Kennung nicht dem autorisierten Benutzer zugeordnet ist, dessen Gesicht dem Gesicht des zu erkennenden Benutzers entspricht.

Für eine besonders effiziente und genaue Bestimmung, ob der zu erkennende Benutzer autorisiert ist, umfasst das Verfahren die folgenden Schritte:
a) Übergeben des wenigstens einen Bildes an ein künstliches neuronales Netzwerk, das insbesondere ein Convolutional Neural Network aufweist,
b) Bestimmen eines vieldimensionalen Vektors, der das Gesicht des zu erkennenden Benutzers repräsentiert, aus dem wenigstens einen Bild mittels des künstlichen neuronalen Netzwerks, und
c) Vergleichen des vieldimensionalen Vektors, der das Gesicht des zu erkennenden Benutzers repräsentiert, mit vieldimensionalen Vektoren in der Datenbank, die die abgelegten Gesichter in der Datenbank repräsentieren.

Die in der Datenbank hinterlegten vieldimensionalen Vektoren können mittels des künstlichen neuronalen Netzwerks auf Basis von Gesichtern, die in der Datenbank hinterlegt werden sollen, ermittelt worden sein.

Zum Beispiel entspricht, das Gesicht des zu erkennenden Benutzers dann einem Gesicht in der Datenbank, wenn der Vergleich der Vektoren eine Ähnlichkeit zwischen den beiden Vektoren oberhalb eines vorbestimmten Schwellwerts ergibt und/oder die beiden Vektoren die zueinander ähnlichsten Vektoren sind.

Ferner wird die Aufgabe gelöst durch ein Computerprogramm umfassend Befehle, die bei der Ausführung des Computerprogramms auf einem Kassensystem, insbesondere einem erfindungsgemäßen Kassensystem, das Kassensystem dazu veranlassen, das erfindungsgemäße Verfahren auszuführen.

Insbesondere wird das erfindungsgemäße Verfahren ausgeführt, wenn die Ausführung des Computerprogramm durch einen Authentifizierungscomputer des Kassensystems erfolgt.

Die Aufgabe wird ferner gelöst durch ein computerlesbares Medium, auf dem das erfindungsgemäße Computerprogramm gespeichert ist.

Im Rahmen dieser Erfindung sind Merkmale, die zum Verfahren beschrieben sind, selbstverständlich auch Merkmale des Kassensystems und umgekehrt.

Weitere Merkmale und Vorteile der Erfindung ergeben sich aus der nachfolgenden Beschreibung sowie aus den beigefügten Zeichnungen, auf die Bezug genommen wird. In den Zeichnungen zeigen:
- Figur 1 ein erfindungsgemäßes Kassensystem zur Durchführung des erfindungsgemäßen Verfahrens,
- Figur 2 das Kassensystem nach Figur 1 in schematischer Blockansicht zur Illustration des erfindungsgemäßen Verfahrens und des erfindungsgemäßen Computerprogramms,
- Figur 3 eine schematische Blockdarstellung einer zweiten Ausführungsform des erfindungsgemäßen Kassensystems, und
- Figur 4 eine schematische Blockdarstellung einer dritten Ausführungsform des erfindungsgemäßen Kassensystems.

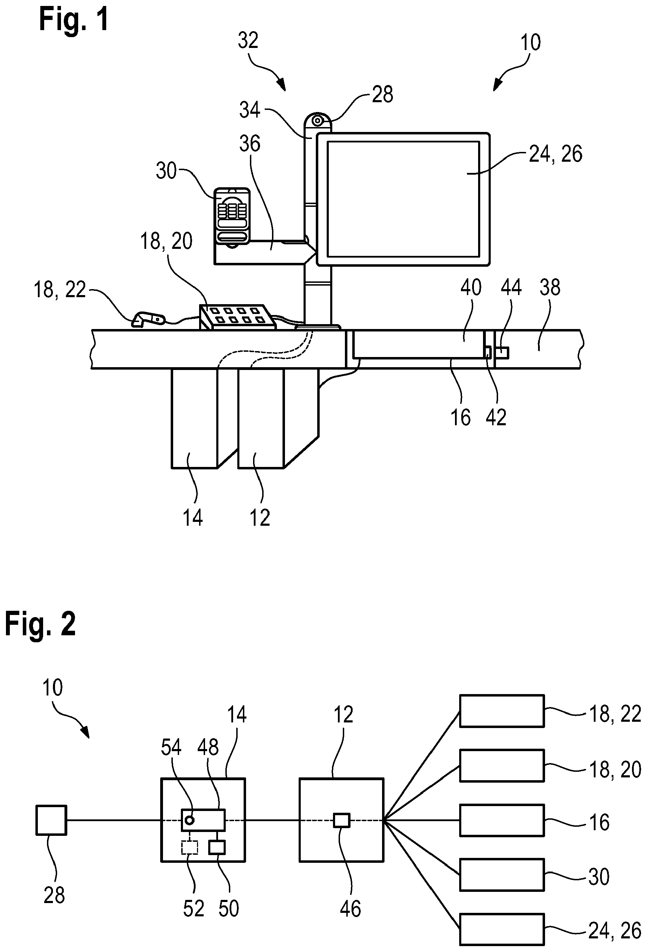

In Figur 1 ist ein Kassensystem 10 schematisch dargestellt.

Das Kassensystem 10 ist beispielsweise ein Kassensystem für eine Kasse im Lebensmitteleinzelhandel.

Das Kassensystem 10 weist einen Kassencomputer 12, einen Authentifizierungscomputer 14, eine Geldkassette 16, Eingabemittel 18, wie eine Tastatur 20 und einen Barcodescanner 22, ein Ausgabemittel 24, wie eine als Bildschirm ausgebildete optische Anzeige 26, und eine Kamera 28 auf.

Als kombiniertes Eingabemittel 18 und Ausgabemittel 24 kann die optische Anzeige 26 ein berührungsempfindlicher Bildschirm sein.

Außerdem kann das Kassensystem 10 ein elektronisches Zahlungsterminal 30 (EFT) wie einen EC- und/oder Kreditkartenleser haben.

Im gezeigten Ausführungsbeispiel weist das Kassensystem 10 einen Ständer 32 auf, an dem wenigstens die optische Anzeige 26, das Zahlungsterminal 30 und die Kamera 28 befestigt sind.

Der Ständer 32 hat einen zentralen Pfosten 34, von dem Halterungen 36 für das Zahlungsterminal 30 und für die optische Anzeige 26 (VESA-Halterung) ausgehen.

An der oberen Stirnseite des zentralen Pfostens 34 ist die Kamera 28 vorgesehen, die in die gleiche Richtung wie die optische Anzeige 26 gerichtet ist.

Der Ständer 32, hier der zentrale Pfosten 34, ist auf einem Verkaufstisch 38 einer Kasse eines Filialgeschäftes des Lebensmitteleinzelhandels befestigt.

Auf dem Verkaufstisch 38 sind beispielsweise die Tastatur 20 und der Barcodescanner 22 angeordnet.

Der Barcodescanner 22 ist im gezeigten Ausführungsbeispiel ein Handscanner, denkbar ist jedoch auch, dass der Barcodescanner 22 in den Verkaufstisch 38 integriert ist.

Außerdem kann der Verkaufstisch 38 eine Waage als Teil des Kassensystems 10 aufweisen.

Die Geldkassette 16 ist im gezeigten Ausführungsbeispiel in den Verkaufstisch 38 integriert.

Die Geldkassette 16 hat eine automatische Klappe 40, die elektronisch entriegelt und geöffnet werden kann.

Denkbar ist auch, dass die Geldkassette 16 als Geldschublade oder anderweitiger Aufbewahrungsbehälter für Bargeld ausgebildet ist. Im Rahmen dieser Erfindung wird der Begriff "Geldkassette" daher auch für eine Geldschublade oder andere Mittel zur Aufbewahrung von Bargeld verwendet.

Die Geldkassette 16 kann außerdem eine Kennung 42 aufweisen.

Die Kennung ist beispielsweise ein maschinenlesbarer Code, wie ein Barcode oder QR-Code, oder ein RFID-Chip.

In der Kennung 42 sind Informationen enthalten, die die Geldkassette 16 eindeutig identifizieren und gegebenenfalls einem Benutzer des Kassensystems 10 zuordnen.

Zum Einlesen der Kennung 42 weist das Kassensystem 10 ein Lesegerät 44 auf. Das Lesegerät 44 kann im Verkaufstisch 38 so angeordnet sein, dass die Kennung 42 beim Einsetzen der Geldkassette 16 in den Verkaufstisch 38 vor dem Lesegerät 44 liegt, wenn die Geldkassette 16 korrekt in den Verkaufstisch 38 eingeführt ist.

Denkbar ist jedoch auch, dass der Barcodescanner 22 das Lesegerät 44 ist.

Unterhalb des Verkaufstisches 38 sind in der in Figur 1 gezeigten Ausführungsform der Kassencomputer 12 und der Authentifizierungscomputer 14 vorgesehen.

In Figur 2 ist das Kassensystem schematisch als Blockzeichnung dargestellt, um die Funktion des Kassencomputers 12 und des Authentifizierungscomputers 14 zu erläutern.

Mit dem Kassencomputer 12 sind die Geldkassette 16, die Eingabemittel 18, also die Tastatur 20 und der Barcodescanner 22, die Ausgabemittel 24, also die optische Anzeige 26 und das Zahlungsterminal 30 elektrisch über Kabel zum Datenaustausch verbunden.

Denkbar ist jedoch auch, dass eine kabellose Verbindung zum Datenaustausch zum Kassencomputer 12 vorgesehen ist, beispielsweise per Bluetooth oder WLAN.

Der Kassencomputer 12 weist ein Transaktionsmodul 46 auf, das mit den Eingabemitteln 18 und den Ausgabemitteln 24 sowie mit der Geldkassette 16 kommuniziert.

Das Transaktionsmodul 46 erfasst durch die Eingabemittel 18 getätigte Eingaben, beispielsweise durch den Barcodescanner 22 eingescannte Barcodes von Produkten, gibt die eingescannten Produkte über die Ausgabemittel 24 aus, berechnet den Gesamtwert der durch den Barcodescanner 22 eingescannten Produkte und steuert schließlich das Zahlungsterminal 30 und/oder die Geldkassette 16 an, um zu ermöglichen, dass die eingescannten Produkte bezahlt werden.

Dabei kann das Transaktionsmodul 46 die Geldkassette 16 steuern. Zum Beispiel kann das Transaktionsmodul 46 die Geldkassette 16 derart ansteuern, dass sich die Klappe 40 der Geldkassette 16 öffnet. Bei der Verwendung einer Geldschublade öffnet sich selbstverständlich anstelle der Klappe die Schublade.

Das Transaktionsmodul 46 und der Kassencomputer 12 können beispielsweise übliche Komponenten eines Kassensystems 10 sein, um Einkäufe abzuwickeln.

Damit Unbefugte keinen Zugriff auf das Transaktionsmodul 46 haben, beispielsweise um die Geldkassette 16 zu öffnen, um Geld zu entnehmen, ist das Transaktionsmodul 46 des Kassencomputers 12 gesperrt, solange der Kassencomputer 12 bzw. das Transaktionsmodul 46 nicht von einem Benutzer des Kassensystems 10 verwendet wird.

Der Authentifizierungscomputer 14 weist im gezeigten Ausführungsbeispiel ein Authentifizierungsmodul 48 und eine Datenbank 50 auf.

Der Authentifizierungscomputer 14 ist zur Datenübertragung mit dem Kassencomputer 12 verbunden, beispielsweise über ein Netzwerk (LAN). Denkbar ist selbstverständlich auch, dass die Kommunikation drahtlos, z. B. über WLAN oder Bluetooth erfolgt.

Die Datenbank 50 kann in einem Speicher des Authentifizierungscomputers 14 gespeichert sein.

In der Datenbank 50 sind beispielsweise Gesichter von Benutzern des Kassensystems 10 hinterlegt, die autorisiert sind, das Kassensystem 10 zu benutzen, d. h. auf das Transaktionsmodul 46 zuzugreifen.

Zum Beispiel umfasst die Datenbank 50 nur Gesichter von autorisierten Benutzern.

Denkbar ist jedoch auch, dass nur ein Teil der in der Datenbank 50 hinterlegten Gesichter zu autorisierten Benutzern gehört. Diese Gesichter sind in der Datenbank 50 dann als "autorisiert" gekennzeichnet.

Selbstverständlich kann in der Datenbank 50 zu jedem Gesicht lediglich ein Benutzer bzw. der Name des Benutzers hinterlegt sein, wobei in einer weiteren Datenbank 52 (gestrichelt gezeichnet) hinterlegt ist, ob ein Benutzer autorisiert ist, das Transaktionsmodul 46 zu verwenden, oder nicht.

Die Kamera 28 ist zum Datenaustausch mit dem Authentifizierungscomputer 14 verbunden, im gezeigten Ausführungsbeispiel über ein Kabel, beispielsweise USB. Selbstverständlich kann die Kamera 28 auch über eine drahtlose Verbindung zum Datenaustausch mit dem Authentifizierungscomputer 14 verbunden sein, wie Bluetooth oder WLAN.

Das Authentifizierungsmodul 48 kann somit Bilder bzw. Bilddaten von der Kamera 28 erhalten und auf die Datenbank 50 zugreifen.

Das Authentifizierungsmodul 48 weist im gezeigten Ausführungsbeispiel außerdem ein künstliches neuronales Netzwerk 54 auf, das als Convolutional Neural Network ausgebildet sein kann.

Wenn nun ein Benutzer das Kassensystem 10, genauer gesagt das Transaktionsmodul 46 verwenden möchte, muss er sich am Kassensystem 10 authentifizieren. Dies erfolgt mittels Gesichtserkennung über die Kamera 28 und den Authentifizierungscomputer 14.

Die Kamera 28 ist auf den Arbeitsplatz des Kassensystems 10 gerichtet, d. h. auf den Bereich vor der Geldkassette 16.

Sobald der Benutzer, der sich authentifizieren möchte (im Folgenden auch "zu erkennender Benutzer" genannt), an seinem Arbeitsplatz am Kassensystem 10 Platz nimmt oder diesen einnimmt, kommt sein Gesicht in das Blickfeld der Kamera 28.

Der Benutzer kann nun den Authentifizierungsprozess starten, beispielsweise durch Betätigung einer bestimmten Taste auf der Tastatur 20. Denkbar ist jedoch auch, dass der Authentifizierungsprozess automatisch beginnt, sobald der Benutzer in das Sichtfeld der Kamera 28 tritt.

In einem ersten Schritt nimmt die Kamera 28 ein Bild vom Gesicht des zu erkennenden Benutzers auf und übermittelt dieses Bild an den Authentifizierungscomputer 14, genauer gesagt an das Authentifizierungsmodul 48.

Selbstverständlich kann mehr als ein Bild vom Gesicht des zu erkennenden Benutzers von der Kamera 28 aufgenommen werden. Beispielsweise kann die Kamera 28 eine Bilderreihe und/oder ein Video vom Gesicht des zu erkennenden Benutzers aufnehmen und an das Authentifizierungsmodul 48 übermitteln.

Das Authentifizierungsmodul 48 ist dazu eingerichtet, das Gesicht des Benutzers anhand des Bildes, der Bilderreihe und/oder des Videos zu erkennen.

Dies kann beispielsweise dadurch geschehen, dass das eine Bild oder die mehreren Bilder bzw. das Video von der Kamera 28 dem künstlichen neuronalen Netzwerk 54 übergeben werden.

Das künstliche neuronale Netzwerk 54 extrahiert aus dem Bild, den Bildern oder dem Video einen vieldimensionalen Vektor, der auch Feature-Vektor genannt wird.

Dieser vieldimensionale Vektor repräsentiert das Gesicht des zu erkennenden Benutzers.

In der Datenbank 50 sind die hinterlegten Gesichter ebenfalls als vieldimensionale Vektoren bzw. Feature-Vektoren gespeichert, die die entsprechenden Gesichter repräsentieren.

Das Authentifizierungsmodul 48 vergleicht nun den vieldimensionalen Vektor, der das Gesicht des zu erkennenden Benutzers repräsentiert, mit den vieldimensionalen Vektoren, die in der Datenbank 50 hinterlegt sind, und ermittelt die Ähnlichkeiten der in der Datenbank 50 abgelegten vieldimensionalen Vektoren mit dem ermittelten Vektor des zu erkennenden Gesichtes.

Das Authentifizierungsmodul 48 bestimmt nun dasjenige in der Datenbank 50 hinterlegte Gesicht, bei dem die Ähnlichkeit zwischen dem Vektor, der das zu erkennende Gesicht repräsentiert, und einem in der Datenbank 50 hinterlegten Vektor am größten ist und oberhalb eines bestimmten Schwellwerts liegt.

Dieses Gesicht wird dann als das Gesicht des zu erkennenden Benutzers angesehen. In anderen Worten wurde ermittelt, dass dieses Gesicht der Datenbank dem Gesicht des zu erkennenden Benutzers entspricht.

Das Gesicht des zu erkennenden Benutzers wurde damit erkannt und einem in der Datenbank 50 hinterlegten Gesicht zugeordnet.

In dem Fall, dass nur autorisierte Gesichter in der Datenbank 50 hinterlegt sind, ist der erkannte Benutzer, also der Benutzer, der sich authentifizieren möchte und vom Authentifizierungsmodul 48 erkannt wurde, folglich auch berechtigt, das Transaktionsmodul 46 zu verwenden.

Der Benutzer ist in diesem Falle autorisiert, das Transaktionsmodul 46 zu benutzen, weswegen das Authentifizierungsmodul 48 eine entsprechende Nachricht an den Kassencomputer 12 sendet, wodurch das Transaktionsmodul 46 freigegeben wird.

Der Benutzer kann dann mit dem Transaktionsmodul 46 arbeiten und beispielsweise Kunden abkassieren.

Außerdem kann das Authentifizierungsmodul 48, nachdem es den Benutzer erkannt hat, Informationen über den zu erkennenden Benutzer bzw. erkannten Benutzer an das Transaktionsmodul 46 weitergeben. Beispielsweise können dadurch persönliche Einstellungen am Transaktionsmodul 46 aktiviert und/oder die Tätigkeiten des Benutzers protokolliert werden.

Wenn die größte gefundene Ähnlichkeit des vieldimensionalen Vektors, der das Gesicht des zu erkennenden Benutzers repräsentiert, mit einem Gesicht bzw. Vektor in der Datenbank 50 unterhalb des bestimmten Schwellwertes liegt, entspricht das von der Kamera 28 erfasste Gesicht keinem Gesicht in der Datenbank 50, sodass der Benutzer nicht autorisiert ist. In diesem Falle bleibt das Transaktionsmodul 46 gesperrt.

Für den Fall, dass mehr als nur die autorisierten Gesichter bzw. Benutzer in der Datenbank 50 hinterlegt sind, muss zudem überprüft werden, ob das entsprechende Gesicht als "autorisiert" gekennzeichnet wurde, sobald vom Authentifizierungsmodul 48 bestimmt wurde, welches Gesicht in der Datenbank 50 dem von der Kamera 28 erfassten Gesicht entspricht.

In dem weiteren Fall, dass den Gesichtern in der Datenbank 50 lediglich Benutzer bzw. Benutzernamen zugeordnet sind, muss ein Zugriff auf die weitere Datenbank 52 durch das Authentifizierungsmodul 48 erfolgen. Das Authentifizierungsmodul 48 prüft dann in der weiteren Datenbank 52, ob der Benutzer, dessen Gesicht dem zu erkennenden Gesicht entspricht, für die Verwendung des Transaktionsmoduls 46 autorisiert ist oder nicht.

Im Rahmen dieser Erfindung wird der in der Datenbank 50 enthaltene autorisierte Benutzer bzw. Benutzername, dessen Gesicht dem zu erkennenden Gesicht (d. h. dem von der Kamera 28 erfassten Gesicht) entspricht, "erkannter Benutzer" genannt.

Außerdem kann während der Authentifizierung des zu erkennenden Benutzers die Kennung 42 der Geldkassette 16 mittels des Lesegeräts 44 eingelesen und an den Authentifizierungscomputer 14 bzw. das Authentifizierungsmodul 48 übergeben werden.

Entweder enthält die Kennung 42 selbst Informationen, welchem Benutzer die Kennung 42 bzw. die Geldkassette 16 zugeordnet ist, oder die Kennung 42 ist in der weiteren Datenbank 52 einem Benutzer zugeordnet.

Das Authentifizierungsmodul 48 kann dann überprüfen, ob die Geldkassette 16, d. h. die Kennung 42, dem zuvor durch die Gesichtserkennung erkannten Benutzer zugeordnet ist oder nicht.

In anderen Worten wird überprüft, ob der Benutzer des Kassensystems 10 die richtige Geldkassette 16, nämlich seine Geldkassette 16 verwendet.

Wenn dies der Fall ist, kann die Freigabe wie geplant erfolgen.

Falls dies nicht der Fall ist, d. h. wenn der erkannte Benutzer nicht dem Benutzer der im Kassensystem 10 verwendeten Geldkassette 16 entspricht, kann eine Warnung ausgegeben und schließlich sogar die Freigabe des Transaktionsmoduls 46 verhindert werden.

Auf diese Weise wird sichergestellt, dass eine Geldkassette 16 nur von einem Benutzer verwendet wird.

Denkbar ist selbstverständlich auch, dass nicht nur einmalig eine Überprüfung des von der Kamera 28 erfassten Gesichtes erfolgt, sondern dass in regelmäßigen Abständen oder kontinuierlich von der Kamera 28 wenigstens ein Bild an den Authentifizierungscomputer 14 übermittelt wird.

Der Authentifizierungscomputer 14 überprüft dann in diesen Abständen, ob der am Kassensystem 10 präsente Benutzer immer noch ein autorisierter Benutzer ist.

Falls dies nicht (mehr) der Fall ist, sperrt das Authentifizierungsmodul 48 das Transaktionsmodul 46, um Missbrauch zu verhindern.

Das zuvor beschriebene Verfahren kann dadurch ausgeführt werden, dass ein Computerprogramm auf dem Authentifizierungscomputer 14 ausgeführt wird, das Befehle umfasst, die den Authentifizierungscomputer 14 dazu veranlassen, das Verfahren auszuführen.

Das Verfahren kann dabei auf einem computerlesbaren Medium, wie einer Festplatte oder einem Datenträger, z. B. einem USB-Stick, gespeichert sein.

Merkmale, die zum Verfahren beschrieben sind, sind selbstverständlich auch Merkmale des Kassensystems und umgekehrt.

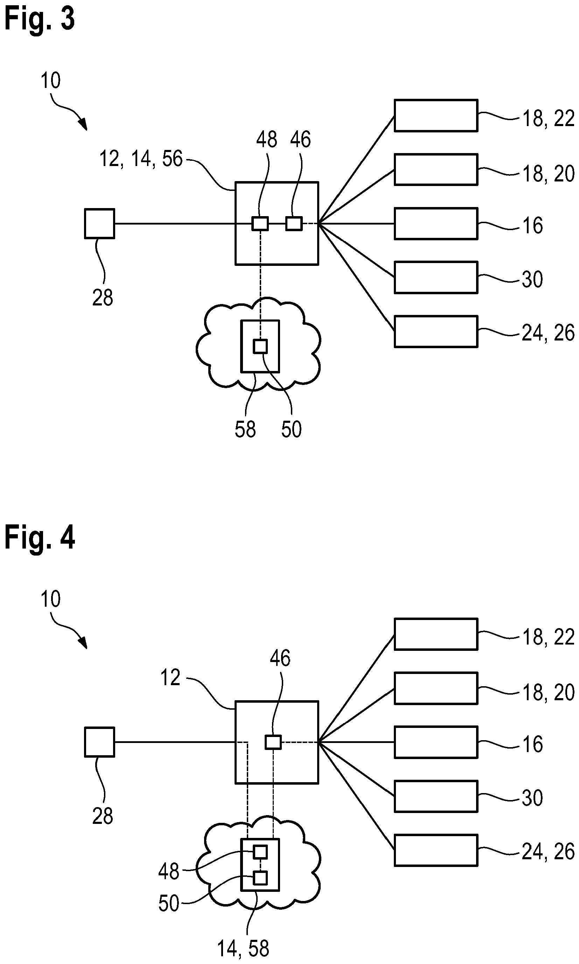

In den Figuren 3 und 4 sind weitere Ausführungsformen der Erfindung gezeigt, die im Wesentlichen der in den Figuren 1 und 2 gezeigten ersten Ausführungsform entsprechen. Im Folgenden wird daher lediglich auf die Unterschiede eingegangen und gleiche und funktionsgleiche Teile sind mit denselben Bezugszeichen versehen.

In Figur 3 ist eine zweite Ausführungsform des Kassensystems 10 dargestellt.

Im Unterschied zur ersten Ausführungsform sind der Kassencomputer 12 und der Authentifizierungscomputer 14 zusammen als ein Computer 56 ausgebildet.

Der Computer 56 hat dabei die benötigte Leistung und Ressourcen, um sowohl die ressourcenfressende Gesichtserkennung des Authentifizierungsmoduls 48 als auch die Ausführung des Transaktionsmoduls 46 gleichzeitig zu ermöglichen.

Sowohl das Authentifizierungsmodul 48 als auch das Transaktionsmodul 46 sind in diesem Fall im Computer 56 vorgesehen.

Auch kann die Datenbank 50 und die weitere Datenbank 52 im Computer 56 vorgesehen sein.

Im in Figur 3 gezeigten Beispiel ist jedoch die Datenbank 50 und/oder die weitere Datenbank 52 nicht in einem Speicher des Computers 56 selbst, sondern auf einem Server 58 hinterlegt.

Der Server 58 ist beispielsweise vom Kassensystem 10 entfernt und ist über ein lokales Netzwerk (LAN) oder das Internet (hier als Wolke angedeutet) vom Authentifizierungsmodul 48 erreichbar.

Hierzu hat der Authentifizierungscomputer 14 bzw. der Computer 56 ein entsprechendes Netzwerkmodul (nicht gezeigt).

Das Authentifizierungsmodul 48 kann dabei selbst auf die Datenbank 50 bzw. die weitere Datenbank 52 zugreifen, oder das Authentifizierungsmodul 48 übermittelt den bestimmten vieldimensionalen Vektor, der das Gesicht des zu erkennenden Benutzers repräsentiert, an den Server 58, der den Vergleich schließlich vornimmt.

Das Authentifizierungsmodul 48 kann dabei so angesehen werden, als würde es sich über den Authentifizierungscomputer 14 und einen Teil des Servers 58 erstrecken.

In Figur 4 ist ein drittes Ausführungsbeispiel des Kassensystems 10 dargestellt. In diesem dritten Ausführungsbeispiel ist im Gegensatz zum ersten Ausführungsbeispiel der Authentifizierungscomputer 14 mitsamt dem Authentifizierungsmodul 48, der Datenbank 50 und der weiteren Datenbank 52 nicht direkt in der Nähe des Kassencomputers 12 und der Kamera 28 vorgesehen, sondern der Authentifizierungscomputer 14 ist als Server oder Teil eines Sensors in einem lokalen Netzwerk oder im Internet ausgebildet.

In diesem Fall wird das von der Kamera 28 erfasste wenigstens eine Bild über das lokale Netzwerk bzw. das Internet an den Authentifizierungscomputer 14 übermittelt.

Dies kann in diesem Falle durch den Kassencomputer 12 geschehen, der dann mit der Kamera 28 verbunden ist.

Nachdem der Authentifizierungscomputer 14 bzw. das Authentifizierungsmodul 48 ermittelt hat, ob der zu erkennende Benutzer autorisiert ist, schickt es die entsprechende Information an den Kassencomputer bzw. das Transaktionsmodul zur Freigabe des Transaktionsmoduls 46.

Selbstverständlich lassen sich die verschiedenen Merkmale der gezeigten Ausführungsformen beliebig miteinander kombinieren.

## Patentansprüche

1. Kassensystem mit einem Kassencomputer (12), einem mit dem Kassencomputer (12) zum Datenaustausch verbundenen Authentifizierungscomputer (14), einer Geldkassette (16) und einer Kamera (28),
wobei der Kassencomputer (12) mit der Geldkassette (16) zum Datenaustausch verbunden ist und ein Transaktionsmodul (46) aufweist, das die Geldkassette (16) steuert,
wobei die Kamera (28) mit dem Authentifizierungscomputer (14) zum Datenaustausch verbunden ist und dazu eingerichtet ist, wenigstens ein Bild vom Gesicht eines zu erkennenden Benutzers aufzunehmen,
wobei der Authentifizierungscomputer (14) ein Authentifizierungsmodul (48) aufweist, das dazu eingerichtet ist, das wenigstens eine Bild von der Kamera (28) zu empfangen, das Gesicht des zu erkennenden Benutzers in dem wenigstens einen Bild zu erkennen und das Transaktionsmodul (46) freizugeben, wenn das Gesicht des zu erkennenden Benutzers einem autorisierten Benutzer in einer Datenbank (50, 52) entspricht.

2. Kassensystem nach Anspruch 1, **dadurch gekennzeichnet, dass** der Authentifizierungscomputer (14) als ein vom Kassencomputer (12) separater Computer, zusammen mit dem Kassencomputer (12) als ein Computer (56) oder als Teil eines Servers (58) ausgebildet ist.

3. Kassensystem nach Anspruch 1 oder 2, **dadurch gekennzeichnet, dass** die Datenbank (50, 52) in einem Speicher des Authentifizierungscomputers (14) hinterlegt ist und/oder auf einem vom Authentifizierungscomputer (14) über ein Netzwerk, insbesondere das Internet, erreichbaren Server (58) hinterlegt ist.

4. Kassensystem nach einem der vorhergehenden Ansprüche, **dadurch gekennzeichnet, dass** das Authentifizierungsmodul (48) ein künstliches neuronales Netzwerk (54), insbesondere ein Convolutional Neural Network, aufweist.

5. Kassensystem nach einem der vorhergehenden Ansprüche, **dadurch gekennzeichnet, dass** das Kassensystem (10) wenigstens ein Eingabemittel (18), insbesondere einen Barcodescanner (22), und/oder wenigstens ein Ausgabemittel (24), insbesondere eine optische Anzeige (26), aufweist.

6. Kassensystem nach einem der vorhergehenden Ansprüche, **dadurch gekennzeichnet, dass** die Geldkassette (16) eine Kennung (42) aufweist, die die Geldkassette (16) einem Benutzer zuordnet, wobei das Kassensystem (10) ein Lesegerät (44) zum Einlesen der Kennung (42) aufweist.

7. Kassensystem nach einem der vorhergehenden Ansprüche, **dadurch gekennzeichnet, dass** das Kassensystem (10) einen Ständer (32) aufweist, an dem die Kamera (28) befestigt ist.

8. Verfahren zur Authentifizierung eines zu erkennenden Benutzers an einem Kassensystem (10), insbesondere einem Kassensystem (10) nach einem der vorhergehenden Ansprüche, mit den folgenden Schritten:
a) Aufnehmen wenigstens eines Bildes vom Gesicht des zu erkennenden Benutzers mittels einer Kamera (28),
b) Erkennen des Gesichtes des zu erkennenden Benutzers in dem wenigstens einen Bild,
c) Vergleichen des Gesichtes des zu erkennenden Benutzers mit in einer Datenbank (50) abgelegten Gesichtern,
d) Freigeben eines Transaktionsmoduls (46) des Kassensystems (10), wenn das Gesicht des zu erkennenden Benutzers einem autorisierten Benutzer in der Datenbank (50, 52) entspricht.

9. Verfahren nach Anspruch 8, **dadurch gekennzeichnet, dass** Informationen über den zu erkennenden Benutzer und/oder den erkannten autorisierten Benutzer an das Transaktionsmodul (46) übermittelt werden.

10. Verfahren nach Anspruch 8 oder 9, **dadurch gekennzeichnet, dass** das Kassensystem (10) eine Geldkassette (16) mit einer Kennung (42), die einem bestimmten Benutzer zugeordnet ist, und ein Lesegerät (44) zum Einlesen der Kennung (42) aufweist, wobei das Verfahren auch die folgenden Schritte umfasst:
a) Einlesen der Kennung (42), und
b) Überprüfen, ob die Kennung (42) dem zu erkennenden Benutzer zugeordnet ist.

11. Verfahren nach Anspruch 10, **dadurch gekennzeichnet, dass** das Freigeben des Transaktionsmoduls (46) verhindert wird, wenn die Kennung (42) nicht dem autorisierten Benutzer zugeordnet ist, dessen Gesicht dem Gesicht des zu erkennenden Benutzers entspricht.

12. Verfahren nach einem der Ansprüche 8 bis 11, **dadurch gekennzeichnet, dass** das Verfahren die folgenden Schritte umfasst:
a) Übergeben des wenigstens einen Bildes an ein künstliches neuronales Netzwerk (54), das insbesondere ein Convolutional Neural Network aufweist,
b) Bestimmen eines vieldimensionalen Vektors, der das Gesicht des zu erkennenden Benutzers repräsentiert, aus dem wenigstens einen Bild mittels des künstlichen neuronalen Netzwerks (54), und
c) Vergleichen des vieldimensionalen Vektors, der das Gesicht des zu erkennenden Benutzers repräsentiert, mit vieldimensionalen Vektoren in der Datenbank (50), die die abgelegten Gesichter in der Datenbank repräsentieren.

13. Computerprogramm umfassend Befehle, die bei der Ausführung des Computerprogramms auf einem Kassensystem (10), insbesondere nach einem der Ansprüche 1 bis 7, das Kassensystem (10) dazu veranlassen, das Verfahren nach einem der Ansprüche 8 bis 12 auszuführen.

14. Computerlesbares Medium, auf dem das Computerprogramm nach Anspruch 13 gespeichert ist.
